# EUROPÄISCHE PATENTSCHRIFT

(11) **EP 2 606 534 B1**
(45) Veröffentlichungstag und Bekanntmachung des Hinweises auf die Patenterteilung: **09.01.2019**
(21) Anmeldenummer: 11745746.5
(22) Anmeldetag: 04.08.2011
(51) Int. Cl.: H01R 9/26, H01R 13/633, H02B 1/052

(54) **TRAGSCHIENEN- UND MODULVERRASTUNG**
MOUNTING RAIL AND MODULE LATCHING SYSTEM
ARRÊT DE RAIL SUPPORT ET DE MODULE

(30) Priorität: 20.08.2010 DE 202010008319 U
(43) Veröffentlichungstag der Anmeldung: 26.06.2013
(73) Patentinhaber: Weidmüller Interface GmbH & Co. KG, 32758 Detmold (DE)
(72) Erfinder: SCHUMACHER, Ralf, 32657 Lemgo (DE); WOHLGEMUTH, Klaus, 32689 Kalletal (DE); FEHLING, Stephan, 32791 Lage (DE); KULTURIDI, Georg, 32758 Detmold (DE); NIGGEMANN, Matthias, 32657 Lemgo (DE); PÜSCHNER, Klaus, 32760 Detmold (DE); WALDHOFF, Marco, 32839 Sandebeck (DE)
(74) Vertreter: Specht, Peter
(86) Internationale Anmeldenummer: PCT/EP2011/063420
(87) Internationale Veröffentlichungsnummer: WO 2012/022621

(56) Entgegenhaltungen:
- EP-A1- 1 648 064
- DE-A1- 10 211 903
- DE-U1- 29 916 303
- US-A- 5 135 415

## Beschreibung

Die Erfindung betrifft eine Baugruppe, insbesondere eine elektrische Baugruppe, die an einer Tragschiene befestigbar und entlang dieser an eine an der Tragschiene angeordnete Nachbarbaugruppe anreihbar ist, sowie ein Fußteil für eine erfindungsgemäße Baugruppe.

Zum Beschalten von elektrischen Baugruppen, beispielsweise von elektrischen Leitern und/oder von Bussystemen und/oder von Modulen komplexer elektronischer Geräte werden häufig Schaltschränke vorgesehen, in denen die elektrischen Baugruppen auf einer Tragschiene aneinander anreihbar sind. Solche elektrischen Baugruppen sind beispielsweise sogenannte Anschlussblöcke, die nicht nur in der Fertigungstechnik, sondern auch zur Vernetzung komplexer Netzwerke Anwendung finden. Die Anschlussblöcke sind durch diese modulare Aneinanderreihbarkeit trotz ihrer Komplexität auch nach der Installation mit verhältnismäßig geringem Aufwand vielfältig veränderbar und einzelne elektrische Baugruppen sind austauschbar.

In solchen insbesondere normierten Schaltschränken ist es oftmals notwendig, dass die elektrischen Baugruppen unmittelbar aneinander anliegend angereiht werden müssen.

Dabei sollen die elektrischen Baugruppen einerseits möglichst leicht und schnell voneinander lösbar sein. Andererseits dürfen sie sich, insbesondere in einer vibrationsbelasteten Umgebung, wie sie beispielsweise im Bereich der Fertigungstechnik häufig vorzufinden ist, nicht selbsttätig voneinander lösen.

Die DE 299 16 303 U1 offenbart einen Anschlussblock, bei dem die auf der Tragschiene parallel zueinander angereihten elektrischen Baugruppen voneinander lösbar sind, indem ihre Parallelität zueinander aufgehoben wird. Jedoch benötigt ein solches Auseinanderschieben sehr viel Bauraum, so dass ein langer Teil der Tragschiene zum voneinander Lösen der elektrischen Baugruppen zur Verfügung stehen muss und somit nicht mit weiteren elektrischen Baugruppen bestückbar ist.

Die EP 1 648 064 A1 offenbart ein Befestigungssystem für Module auf Tragschienen, bei dem im Fuß der Module integrierte Riegel das Modul sowohl mit der Tragschiene als auch mit einem seitlich angereihten Modul verriegeln.

Weiterhin ist es gegebenenfalls vorteilhaft, in den aneinander anliegenden Wänden zueinander benachbarter elektrischer Baugruppen jeweils elektrische Kontakte vorzusehen, die miteinander Kontaktieren, wenn die elektrischen Baugruppen aneinander anliegend angeordnet sind. Die Aufhebung der Parallelität, und daher ein schräges Lösen der zueinander benachbarten elektrischen Baugruppen voneinander, ist jedoch je nach Ausführungsform der in den zueinander benachbarten Wänden vorgesehenen elektrischen Kontakte, beispielsweise bei als Stecker- und Buchse- System ausgeführten elektrischen Kontakten, nicht ohne weiteres möglich. Denn je nach Bauform der Kontakte besteht die Gefahr, dass die elektrischen Kontakte gegeneinander verkanten, dass Kurzschlüsse entstehen, oder dass die elektrischen Kontakte dabei beschädigt oder sogar zerstört werden.

Aufgabe der Erfindung ist es, eine an einer Tragschiene aneinanderreihbare Baugruppe, insbesondere eine elektrischen Baugruppe, zu schaffen, die einfach, schnell, beschädigungsfrei und unter Inanspruchnahme von möglichst wenig Bauraum von einer Nachbarbaugruppe lösbar ist, auch wenn in aneinander anliegenden Seitenwänden aneinandergereihter banachbarter Baugruppen, insbesondere elektrische Kontakte vorgesehen sind, wobei die Baugruppe ein sicheres Aneinanderreihen, insbesondere in vibrationsbelasteter Umgebung, so ermöglicht, dass keine Gefahr eines selbsttätigen voneinander Lösens mehrerer aneinandergereihter Baugruppen besteht, und wobei die Baugruppe kostengünstig herstellbar ist.

Die Aufgabe wird gelöst mit einer Baugruppe, insbesondere einer elektrischen Baugruppe, die an einer Tragschiene befestigbar und durch Verschieben in eine Anreihrichtung entlang dieser an eine an der Tragschiene angeordnete Nachbarbaugruppe anreihbar ist, mit einem Grundkörper, und mit einem Fußteil, welches relativ zum Grundkörper in und entgegen eine Verschieberichtung verschiebbar ist, wobei die Baugruppe durch Verschieben des Fußteils in Verschieberichtung von der Nachbarbaugruppe lösbar ist, wobei sie beim Lösen gleichzeitig entgegen die Anreihrichtung von der Nachbarbaugruppe weg verschoben wird.

Beim Lösen der Baugruppe von der Nachbarbaugruppe wird diese daher erfindungsgemäß von der Nachbarbaugruppe weg geschoben, so dass die Baugruppe von der Nachbarbaugruppe beabstandet ist. Dadurch ist die Handhabung der Baugruppe für den Bediener sehr einfach. Außerdem wird die Baugruppe definiert von der Nachbarbaugruppe weg geschoben, so dass Bauteile, beispielsweise elektrische Kontakte, die in einander gegenüberliegenden Seitenwänden der Baugruppe und Nachbarbaugruppe angeordnet sind, beim Lösen der Baugruppe nicht beschädigt werden.

Um die Baugruppe beim Lösen von der Nachbarbaugruppe zu verschieben, ist am Fußteil bevorzugt ein Schiebemittel und am Grundkörper eine Rampe vorgesehen, wobei das Schiebemittel beim Lösen der Baugruppe von der Nachbarbaugruppe an der Rampe entlang gleitet und die Baugruppe gegen die Anreihrichtung verschiebt.

Ebenfalls bevorzugt ist am Fußteil ein Rastmittel vorgesehen, welches mit einem am Grundkörper vorgesehenen Gegenrastmittel so zusammenwirkt, dass das Fußteil beim Lösen der Baugruppe von der Nachbarbaugruppe in einer Offenstellung am Grundkörper verrastet. In der Offenstellung ist die Baugruppe zumindest nicht an der Nachbarbaugruppe verrastet. Bevorzugt ist sie weder an der Nachbarbaugruppe noch an der Tragschiene verrastet, so dass sie der Anordnung entnehmbar ist.

In einer bevorzugten Ausführungsform umfasst die Baugruppe einen Grundkörper sowie ein Fußteil, wobei sie durch Verschieben des Fußteils in eine Verschieberichtung relativ zum Grundkörper sowohl an der Nachbarbaugruppe als auch an der Tragschiene anordbar ist. Für das Anordnen der Baugruppe sowohl an der Tragschiene als auch an der Nachbarbaugruppe ist daher lediglich ein Bauteil, nämlich das Fußteil erforderlich, so dass die Handhabung der Baugruppe beim Anordnen für den Bediener auch dadurch sehr einfach ist.

Die Tragschiene erstreckt sich bevorzugt parallel einer Tragschienenebene, wobei sich die Nachbarbaugruppe parallel einer Baugruppenebene erstreckt, wobei die Baugruppe durch Verschieben in eine Aufrastrichtung und/oder Verschwenken in eine Aufrastdrehrichtung, die jeweils parallel der Baugruppenebene verlaufen, an die Tragschiene, und durch Verschieben entlang einer Anreihrichtung, die parallel der Tragschienenebene verläuft, an die Nachbarbaugruppe anordbar ist.

Demnach ist die Baugruppe durch Verschieben in eine Aufrastrichtung und/oder Verschwenken in eine Aufrastdrehrichtung, die jeweils parallel einer Baugruppenebene verlaufen, an einer Tragschiene anordbar. Dabei ist die Baugruppenebene die Ebene, in der sich eine an der Tragschiene angeordnete Baugruppe erstreckt. Anschließend ist die Baugruppe an eine Nachbarbaugruppe anordbar, indem sie in eine Anreihrichtung, welche parallel einer Tragschienenebene verläuft, in der sich die Tragschiene erstreckt, verschoben wird. Dadurch ist zum Anordnen einer Baugruppe zwischen zwei benachbarte Nachbarbaugruppen sowie zum Lösen und Entnehmen der Baugruppe lediglich ein Bauraum erforderlich, der nur geringfügig größer als die Tiefe der Baugruppe selbst ist. Im Vergleich zu einem Anschlussblock mit herkömmlichen Baugruppen ist bei einem Anschlussblock mit erfindungsgemäßen Baugruppen daher erheblich mehr Bauraum entlang der Tragschiene nutzbar, und/oder ein solcher Anschlussblock ist entsprechend kleiner baubar.

Außerdem ermöglicht das Anordnen der Baugruppe an die Nachbarbaugruppe bei etwa paralleler Anordnung zueinander das Vorsehen von Bauteilen in den einander benachbarten, insbesondere aneinander anliegenden, Seitenwänden der Baugruppe und der Nachbarbaugruppe. Dadurch können an einer dieser Seitenwände angeordnete Bauteile, die insbesondere gegenüber der Seitenwand, an der sie angeordnet sind, erhaben sind, beim Anordnen der Baugruppe an die Nachbarbaugruppe in Nachbarbauteile der benachbarten Seitenwand eingesteckt werden, ohne beschädigt zu werden oder Beschädigungen zu verursachen. Die erfindungsgemäße Baugruppe ermöglicht daher das Anordnen von beispielsweise elektrischen Anschlüssen wie Stecker- Buchse Verbindungen in herkömmlicher Bauform an den Seitenwänden der Baugruppe.

In einer bevorzugten Ausführungsform wird die Baugruppe beim Anreihen an die Nachbarbaugruppe an dieser verrastet, so dass sie sich auch in vibrationsbelasteter Umgebung nicht selbsttätig von der Nachbarbaugruppe löst.

Die Tragschienenebene verläuft vorzugsweise in einem rechten Winkel zur Baugruppenebene. Weiterhin ist es bevorzugt, dass eine die Tragschienenebene schneidende Schnittlinie der Baugruppenebene in einem rechten Winkel zu einer Längserstreckung der Tragschiene verläuft.

In einer bevorzugten Ausführungsform weist die Baugruppe ein Baugruppenrastmittel auf, welches zum Verrasten der Baugruppe an die Nachbarbaugruppe vorgesehen ist, wobei die Nachbarbaugruppe ein Nachbarbaugruppenrastmittel umfasst, welches beim Verrasten mit dem Baugruppenrastmittel zusammenwirkt, wobei das Baugruppenrastmittel zum Anordnen der Baugruppe an die Nachbarbaugruppe in Verschieberichtung gegen die Kraft eines Kraftmittels verschiebbar, und zum Verrasten der Baugruppe an der Nachbarbaugruppe gegen die Verschieberichtung in Richtung der Kraft zurückschiebbar vorgesehen ist.

Das Baugruppenrastmittel weicht in dieser Ausführungsform daher beim Anordnen der Baugruppe an die Nachbarbaugruppe dem Nachbaubaugruppenrastmittel aus, so dass die Baugruppe ohne ein Verdrehen oder Verschwenken an die Nachbarbaugruppe anordbar ist, indem sie, bevorzugt in paralleler Anordnung zur Nachbarbaugruppe, in Anreihrichtung verschoben wird. Da das Baugruppenrastmittel aufgrund der Kraft, gegen die es beim Anordnen an die Nachbarbaugruppe verschoben wird, gegen die Verschieberichtung zurück geschoben wird, wird die Baugruppe mit der Kraft des Kraftmittels an der Nachbarbaugruppe gehalten.

Als Kraftmittel ist bevorzugt eine Feder vorgesehen. Es sind aber auch andere beispielsweise elastische Bauteile, die eine Rückstellkraft bewirken, verwendbar.

In einer bevorzugten Ausführungsform weist die Baugruppe weiterhin ein Tragschienenrastmittel auf, welches zum Verrasten der Baugruppe an die Tragschiene vorgesehen ist, wobei die Tragschiene einen Rand aufweist, welcher beim Verrasten mit dem Tragschienenrastmittel zusammenwirkt, so dass das Tragschienenrastmittel zum Anordnen der Baugruppe an die Nachbarbaugruppe in Verschieberichtung gegen die Kraft des Kraftmittels verschieblich, und zum Verrasten der Baugruppe an der Tragschiene gegen die Verschieberichtung in Richtung der Kraft zurückschiebbar vorgesehen ist.

Auch das Tragschienenrastmittel weicht in dieser Ausführungsform daher beim Anordnen der Baugruppe an die Tragschiene dem Rand der Tragschiene aus. Grundsätzlich ist die Baugruppe daher ebenfalls ohne ein Verdrehen oder Verschwenken an der Tragschiene anordbar, indem sie, bevorzugt in paralleler Anordnung zur Nachbarbaugruppe, in Aufrastrichtung verschoben wird. Und da das Tragschienenrastmittel ebenfalls aufgrund der Kraft, gegen die es beim Anordnen an die Tragschiene verschoben wird, gegen die Verschieberichtung zurück geschoben wird, wird die Baugruppe ebenfalls mit der Kraft des Kraftmittels an der Tragschiene gehalten.

In einer bevorzugten Ausführungsform sind das Baugruppenrastmittel und/oder das Tragschienenrastmittel an dem Fußteil angeordnet. Beim Verschieben des Fußteils werden dann das Baugruppenrastmittel und/oder das Tragschienenrastmittel verschoben.

Dabei ist das Fußteil bevorzugt gegen die Kraft des Kraftmittels in die Verschieberichtung, und in Richtung der Kraft gegen die Verschieberichtung, verschieblich. Weiterhin bevorzugt ist das Fußteil reversibel lösbar am Grundkörper angeordnet. Weiterhin bevorzugt weist es eine Längserstreckung auf, zu der es spiegelsymmetrisch gefertigt ist.

Die Baugruppe ist ebenfalls bevorzugt zu einer Mittellinie spiegelsymmetrisch gefertigt, so dass die Baugruppe auch in zur Tragschiene um 180° gedrehter Anordnung an die Nachbarbaugruppe anreihbar ist.

Bevorzugt ist die Baugruppe durch Verschieben des Fußteils gegen die Verschieberichtung relativ zum Grundkörper an der Nachbarbaugruppe und der Tragschiene verrastbar. Ebenfalls bevorzugt ist sie durch Verschieben des Fußteils in die Verschieberichtung relativ zum Grundkörper sowohl von der Nachbarbaugruppe als auch von der Tragschiene lösbar.

In dieser Ausführungsform sind sowohl das Baugruppenrastmittel als auch das Tragschienenrastmittel am Fußteil angeordnet, so dass durch Verschieben des Fußteils sowohl das Baugruppenrastmittel als auch das Tragschienenrastmittel verschoben wird.

Besonders bevorzugt ist am Fußteil eine Schräge vorgesehen, die beim Anordnen der Baugruppe an die Tragschiene entlang der Tragschiene gleitet. Dabei wird das Fußteil, und daher gleichzeitig das Tragschienenrastmittel, gegen die Kraft in die Verschieberichtung verschoben.

In einer weiteren bevorzugten Ausführungsform ist am Fußteil eine Handhabe, insbesondere zur Betätigung mittels eines Schraubendrehers, zum Lösen der Baugruppe von der Nachbarbaugruppe und/oder der Tragschiene vorgesehen, so dass das Lösen der Baugruppe für den Bediener mittels der Handhabe sehr einfach ist.

Um die Handhabung der Baugruppe beim Anordnen und Verrasten an der Tragschiene zu erleichtern, ist zur Befestigung der Baugruppe an der Tragschiene bevorzugt beidseitig der Tragschiene ein Rand vorgesehen, und vorzugsweise sind zwei Tragschienenrastmittel an der Baugruppe anzuordnen, von denen jedes mit einem der Ränder der Tragschiene zusammenwirkt. Die Tragschienenrastmittel sind dabei vorzugsweise so vorgesehen, dass die Baugruppe zunächst parallel der Baugruppe in einer zur Tragschienenebene verschwenkten Stellung mit einem der Tragschienenrastmittel am einen Rand der Tragschiene angeordnet wird, um sie anschließend in Aufrastdrehrichtung zu verschwenken, so dass das andere Tragschienenrastmittel an dem anderen Rand der Tragschiene angeordnet wird. Ebenfalls bevorzugt ist die Baugruppe an der Tragschiene anordbar, indem sie parallel zur Baugruppenebene sowie parallel zur Tragschienenebene angeordnet und in Aufrastrichtung verschoben wird. Die Tragschienenrastmittel weichen dabei den Rändern ebenfalls zunächst aus und werden dann aufgrund der Kraft des Kraftmittels gegen die Verschieberichtung zurück geschoben, wobei die Baugruppe an der Tragschiene verrastet wird.

Es ist ebenfalls bevorzugt, zwei Baugruppenrastmittel vorzusehen, die mit zwei Nachbarbaugruppenrastmitteln zusammenwirken, um, insbesondere bei großflächigen Baugruppen, die zum Verrasten der Baugruppe an der Nachbarbaugruppe aufzubringende Kraft zu verteilen und/oder eine größere Verrastungssicherheit zu erzielen.

Um zwei Tragschienenrastmittel und/oder zwei Baugruppenrastmittel an der Baugruppe vorzusehen, ist es bevorzugt, die Baugruppe mit zwei Fußteilen mit jeweils einem Tragschienenrastmittel und einem Baugruppenrastmittel herzustellen. In dieser Ausführungsform ist die Baugruppe der Anordnung beispielsweise entnehmbar, indem zunächst das eine Fußteil und dann das andere Fußteil in die Offenstellung verschoben werden. Ebenfalls bevorzugt sind die Fußteile so vorgesehen, dass beide Fußteile von der Tragschiene und/oder der Nachbarbaugruppe gleichzeitig lösbar sind.

Die Aufgabe wird weiterhin gelöst mit einem Anschlussblock mit einer Tragschiene und zumindest einer erfindungsgemäßen Baugruppe, die an der Tragschiene anordbar ist.

Nachfolgend wird die Erfindung unter Bezug auf die Zeichnungen anhand von Ausführungsbeispielen näher erläutert, wobei weitere Vorteile der Erfindung deutlich werden. Es zeigt:
- Fig. 1: eine perspektivische Ansicht eines Anschlussblocks mit mehreren erfindungsgemäßen Baugruppen;
- Fig. 2: in (a) ein Fußteil für eine der in Fig. 1 dargestellten Baugruppen und in (b) eine Ansicht des Bodens der Baugruppe, an der das Fußteil anordbar ist;
- Fig. 3: in (a) und (b) zwei perspektivische Ansichten der Baugruppen 11, 12, 13 der Fig. 1, wobei das Fußteil sowie das Kraftmittel explosionsartig gezeigt sind;
- Fig. 4: in (a) eine perspektivische Ansicht einer der in Fig. 1 dargestellten Baugruppen, wobei an der Baugruppe eine Anschlussleiste angeordnet ist, sowie in (b) einen Ausschnitt aus (a);
- Fig. 5: in (a) eine weitere perspektivische Ansicht einer der Baugruppen der Fig. 1 mit Anschlussleiste, sowie in (b) einen Ausschnitt aus (a);
- Fig. 6: eine Vorderansicht des in Fig. 1 dargestellten Anschlussblocks;
- Fig. 7 - 9: jeweils Schnittdarstellungen des Anschlussblocks entlang der Linie C-C der Fig. 6 sowie in Fig. 8(c), (d) und Fig. 9 (c) Ausschnitte davon; und
- Fig. 10: das Lösen der Baugruppe mit Anschlussleiste der Fig. 4 und 5 von der Tragschiene mittels eines Betätigungsmittels.

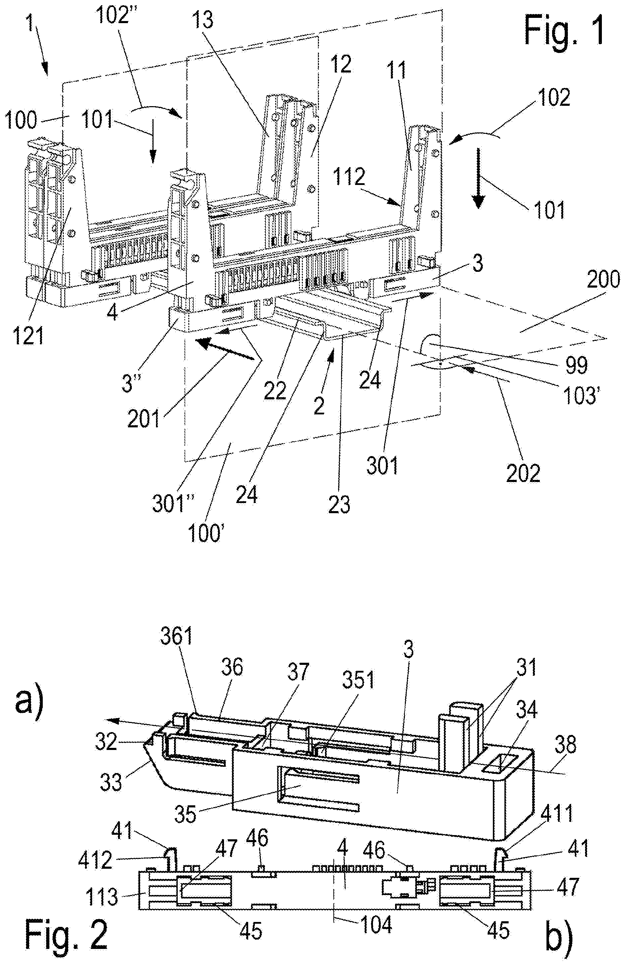

Fig. 1 zeigt eine perspektivische Ansicht eines Anschlussblocks 1 mit mehreren erfindungsgemäßen Baugruppen 11, 12, 13. Der Anschlussblock 1 umfasst zwei aneinander anliegende und miteinander sowie an einer Tragschiene 2 angeordnete Baugruppen 12, 13, sowie eine Baugruppe 11, die noch nicht an der Tragschiene 2 angeordnet ist. Die Darstellung verdeutlicht das Anordnen der noch nicht an der Tragschiene 2 angeordneten Baugruppe 11 an die Tragschiene 2 sowie das Anreihen der Baugruppe 11 an die ihr dann benachbarte und bereits an der Tragschiene 2 angeordnete Nachbarbaugruppe 12.

Die Tragschiene 2 erstreckt sich entlang einer Längserstreckung 202 und ist im Querschnitt u-förmig gebildet. Sie weist zwei Ränder 22 auf, die durch Schenkel der u-förmigen Tragschiene 2 gebildet sind und die voneinander wegweisend ausgerichtet sind. Im Folgenden werden daher die Begriffe Schenkel der Tragschiene 2 sowie Rand 22 der Tragschiene 2 synonym verwendet. Die Schenkel 22 sowie eine die Schenkel 22 verbindende Querstrebe 23 der Tragschiene 2 erstrecken sich parallel einer Tragschienenebene 200, wobei die hier dargestellte Tragschiene 2 zwei weitere Seitenstreben 24 aufweist, die die Querstrebe 23 jeweils mit einem Schenkel 22 verbinden und die quer zur Tragschienenebene 200 angeordnet sind.

Die Formulierung, dass sich die Tragschiene 2 parallel einer Tragschienenebene 200 erstreckt, ist im Sinne der Erfindung so zu verstehen, dass sich ein Rand 22 der Tragschiene 2, der zum Verrasten der erfindungsgemäßen Baugruppe 11 vorgesehen ist, parallel der Tragschienenebene 200 erstreckt.

Die an der Tragschiene 2 angeordnete Nachbarbaugruppe, die der an die Tragschiene 2 anzuordnenden Baugruppe 11 benachbart ist, erstreckt sich parallel einer Baugruppenebene 100.

Die Fig. 1 zeigt weiterhin eine zur Baugruppenebene 100 parallele zweite Baugruppenebene 100', in der sich die noch nicht an der Tragschiene 2 angeordnete Baugruppe 11 erstreckt.

Fig. 1 zeigt, dass die Tragschienenebene 200 sowie die Baugruppenebene 100 im dargestellten Ausführungsbeispiel in einem rechten Winkel 99 zueinander angeordnet sind. Außerdem verläuft eine die Tragschienenebene 200 schneidende Schnittlinie, hier gezeigt an der Schnittlinie 103' mit der zweiten Baugruppenebene 100', in einem rechten Winkel zur Längserstreckung 202 der Tragschiene 2.

Die Baugruppe 11 ist durch Verschieben in eine Aufrastrichtung 101 und/oder Verschwenken in eine Aufrastdrehrichtung 102, die sich jeweils parallel der Baugruppenebene 100 erstrecken, an die Tragschiene 2 anordbar. Weiterhin ist die Baugruppe 11 durch Verschieben in eine Anreihrichtung 201, die sich parallel der Tragschienenebene 200 erstreckt, an die Nachbarbaugruppe 12 anordbar. Die Baugruppe 11 wird hier daher zum Anordnen an die Nachbarbaugruppe 12 zunächst in vertikaler Richtung an der Tragschiene 2 angeordnet und dann entlang dieser verschoben.

In dem dargestellten Ausführungsbeispiel weist jede der Baugruppen 11, 12, 13 jeweils zwei Fußteile 3, 3" auf, die zum Verrasten der Baugruppen 11, 12, 13 an der Tragschiene 2 jeweils mit einem der beiden Ränder 22 der Tragschiene 2 zusammenwirken. Die Baugruppen 11, 12, 13 weisen außerdem jeweils einen Grundkörper 4 auf, an dem die Fußteile 3, 3" angeordnet sind.

Die beiden an einer Baugruppe 11, 12, 13 angeordneten Fußteile 3, 3" sind jeweils in eine Verschieberichtung 301, 301" verschiebbar. Da die Ränder 22 der hier vorgesehenen Tragschiene 2 voneinander wegweisend ausgerichtet sind, ist die Verschieberichtung 301, 301" der beiden Fußteile 3 entgegen gerichtet zueinander vorgesehen. Die durch die voneinander wegweisende Ausrichtung der Ränder entstehenden Richtungsänderungen sind in der Darstellung der Fig. 1 durch Doppelstriche an den Bezugszeichen 301, 301", 102, 102" gekennzeichnet.

Fig. 2 zeigt in (a) ein Fußteil 3 für die in Fig. 1 dargestellten Baugruppen 11 und in (b) eine Ansicht des Bodens der Baugruppen 11, an die das Fußteil 3 anordbar ist. Das Fußteil 3 erstreckt sich entlang einer Längserstreckung 38 und ist zu dieser symmetrisch angeordnet. Das Fußteil 3 weist somit nicht nur ein sondern zwei Baugruppenrastmittel 31, Tragschienenrastmittel 32, Schiebemittel 35 und Rastmittel 36 auf. Daher ist dasselbe Fußteil 3 für das Anordnen und Verrasten einer Baugruppe 11 an voneinander wegweisende Ränder 22 einer Tragschiene 2 verwendbar. Außerdem umfasst das Fußteil 3 weiterhin eine Schräge 33, einen Steg 37 sowie eine Handhabe 34.

In der Draufsicht der Seitenwand 113, an der das Fußteil 3 anordbar ist, ist sichtbar, dass zu einer durch die Baugruppe 11 verlaufenden Mittellinie 104 auch zwei Nachbarbaugruppenrastmittel 41, zwei Rampen 45, zwei Entrastmittel 46 und zwei Gegenstege 47 symmetrisch am Grundkörper 4 angeordnet sind.

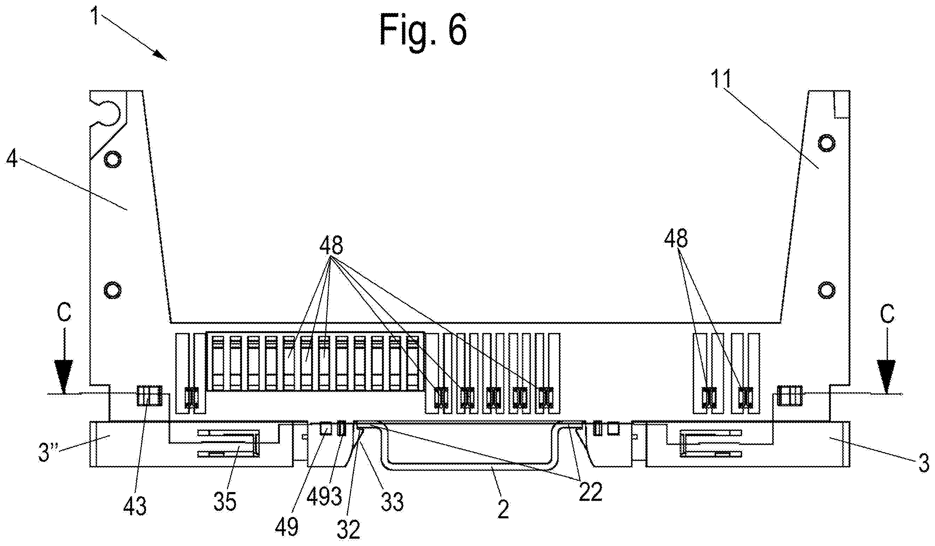

Weiterhin sind zwei in dieser Darstellung nicht sichtbare erste Ausnehmungen 43 zur Aufnahme jeweils eines Baugruppenrastmittels 31, zwei in dieser Darstellung ebenfalls nicht sichtbare Gegenrastmittel 49, die als zweite Ausnehmungen jeweils zur Aufnahme eines Rastmittels 36 ausgeführt sind, sowie zwei dritte Ausnehmungen 493, die ebenfalls zur Aufnahme des Rastmittels 36 vorgesehen sind, symmetrisch zur Mittellinie 104 am Grundkörper 4 vorgesehen (s. Fig. 6).

Die zur Mittellinie 104 symmetrisch am Grundkörper 4 angeordneten Bauteile sowie die zur Längserstreckung 38 symmetrisch am Fußteil 3 angeordneten Bauteile ermöglichen, dass die Baugruppe 11 auch in zur Tragschiene 2 um 180° gedrehter Position an der Tragschiene 2 anordbar sind.

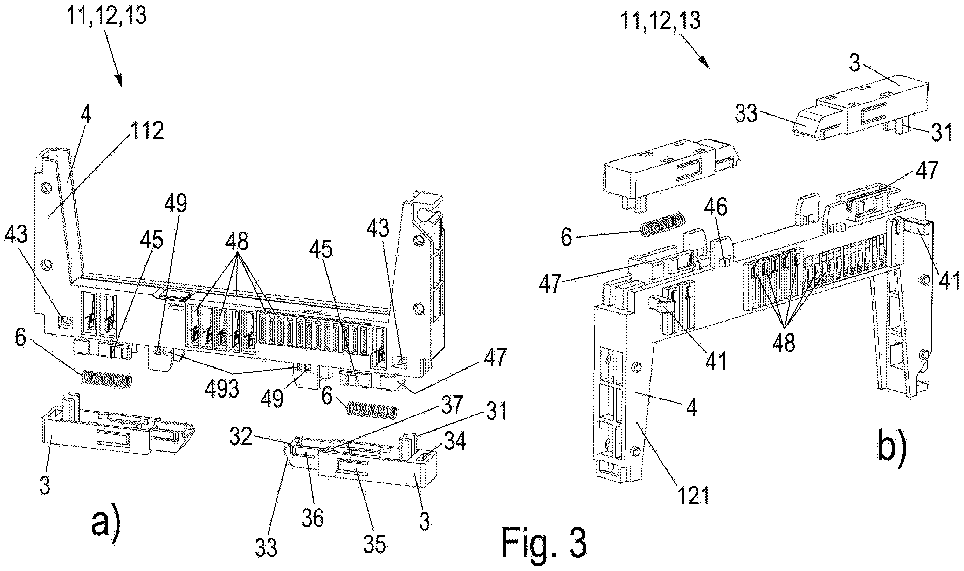

Beim ersten Aufrasten der Baugruppe 11 an die Tragschiene 2 gerät die Schräge 33 des Fußteils 3 beim Verschieben in die Aufrastrichtung 101 und/oder beim Verschwenken in die Aufrastdrehrichtung 102 in Anlage an den Rand 22 der Tragschiene 2. Beim weiteren Verschieben in Aufrastrichtung 101 und/oder Verschwenken in Aufrastdrehrichtung 102 gleitet die Schräge 33 am Rand 22 entlang, wobei das Fußteil 3 gegen die Kraft eines Kraftmittels 6 (s. Fig. 3) relativ zum Grundkörper 4 in die Verschieberichtung 301 verschoben wird, bis der Rand 22 in Eingriff mit dem Tragschienenrastmittel 32 gerät. Das Tragschienenrastmittel 32 ist hier als eine Kante vorgesehen. Es sind aber auch weitere Ausführungsformen bevorzugt, beispielsweise ein Tragschienenrastmittel 32 in der Ausbildung einer Ausnehmung.

Das Baugruppenrastmittel 31 ist als sich gegen die Aufrastrichtung 101 erstreckender Steg ausgebildet und erstreckt sich zumindest teilweise in den Grundkörper 4 hinein.

Die jeweilige Funktion der weiteren Bauteile wird anhand der folgenden Figuren, vor allem anhand der Fig. 6 - 9, beschrieben. Dabei wird die Funktion der mehrfach vorgesehenen Bauteile 31, 32, 35, 36, 37, 41, 43, 45, 46, 47, 49, 493 im Folgenden jeweils anhand eines der mehrfach vorgesehenen Bauteile dargestellt, und insbesondere jeweils anhand eines Fußteils 3. Sie gilt aber für die anderen mehrfach vorgesehenen Bauteile jeweils analog.

Fig. 3 zeigt in (a) und (b) zwei perspektivische Ansichten der Baugruppen 11, 12, 13 der Fig. 1, wobei das Fußteil 3 sowie ein Kraftmittel 6 explosionsartig gezeigt sind.

Sichtbar ist in der Fig. 3(a) eine in der Anordnung der Fig. 1 in der an der Tragschiene 2 angeordneten Position an einer Nachbarseitenwand 121 der Nachbarbaugruppe 12 anliegende Seitenwand 112 der Baugruppe 11. In der Fig. 3(b) ist die in der Fig. 1 in der an der Tragschiene 2 angeordneten Position an der Seitenwand 112 der Baugruppe 11 anliegende Nachbarseitenwand 121 der Nachbarbaugruppe 12.

Erkennbar ist in dieser Darstellung vor allem, dass an der Nachbarseitenwand 121 zu dieser erhabene Bauteile vorgesehen sind. Solche Bauteile sind beispielsweise das Nachbarbaugruppenrastmittel 41, das Entrastmittel 46 und als Stecker ausgebildete elektrische Anschlüsse 48.

Die Baugruppe 11, 12, 13 dieser Ausführungsform ist eine elektrische Baugruppe. Grundsätzlich ist die vorliegende Erfindung aber auch für Baugruppen verwendbar, die nicht elektrische Baugruppen sind (nicht gezeigt). Insbesondere ist sie verwendbar für eine Baugruppe, in die ein Elektronik- Element 442 und/oder an die eine elektrische Anschlussleiste 44 anordbar ist.

Fig. 3 zeigt eine Ausführungsform, in der das Kraftmittel 6 als Feder ausgeführt ist und in einem Bauraum des Grundkörpers 4 (s. Fig. 3(b)) zwischen dem Steg 37 des Fußteils 3 und dem Gegensteg 47 des Grundkörpers 4 angeordnet ist.

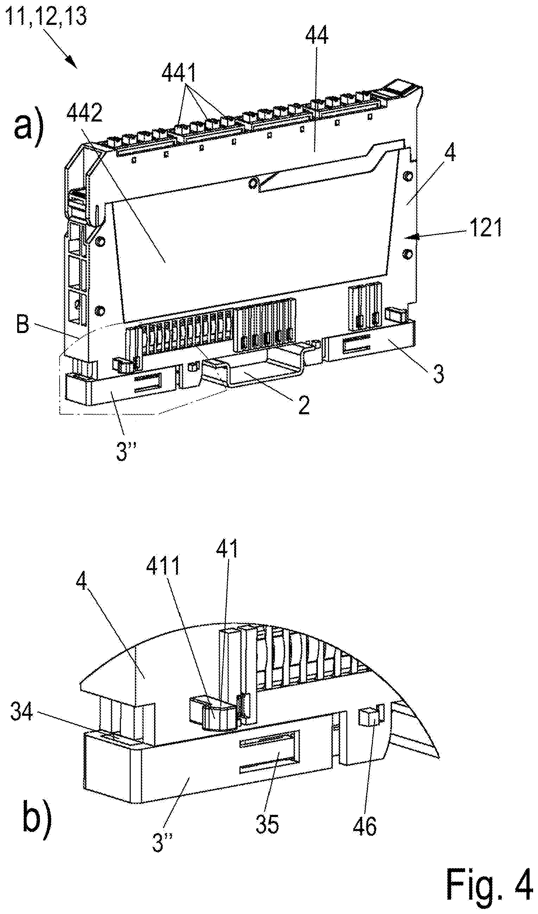

Fig. 4 zeigt in (a) eine perspektivische Ansicht der in Fig. 1 dargestellten Baugruppen 11, 12, 13, wobei die Baugruppe 11 das Elektronik- Element 442 sowie die Anschlussleiste 44 umfasst, sowie in (b) einen Ausschnitt B aus (a). Sichtbar ist die in der Darstellung der Fig. 1 an der Seitenwand 112 anliegende Nachbarseitenwand 121.

Das Elektronik- Element 442 ist in die Baugruppe einschiebbar und elektrisch mit der Anschlussleiste 44 verbunden, die elektrische Anschlüsse 441 zum Beschalten der Baugruppe 11 aufweist. Die Baugruppe 11 ist mittels zweier zu ihrer Mittellinie 104 (s. Fig. 2) symmetrisch angeordneter Fußteile 3, 3" an der Tragschiene 2 verrastet.

In dem Ausschnitt sind vor allem das Nachbarbaugruppenrastmittel 41, das Entrastmittel 46, das Schiebemittel 35 sowie die Handhabe 34 erkennbar.

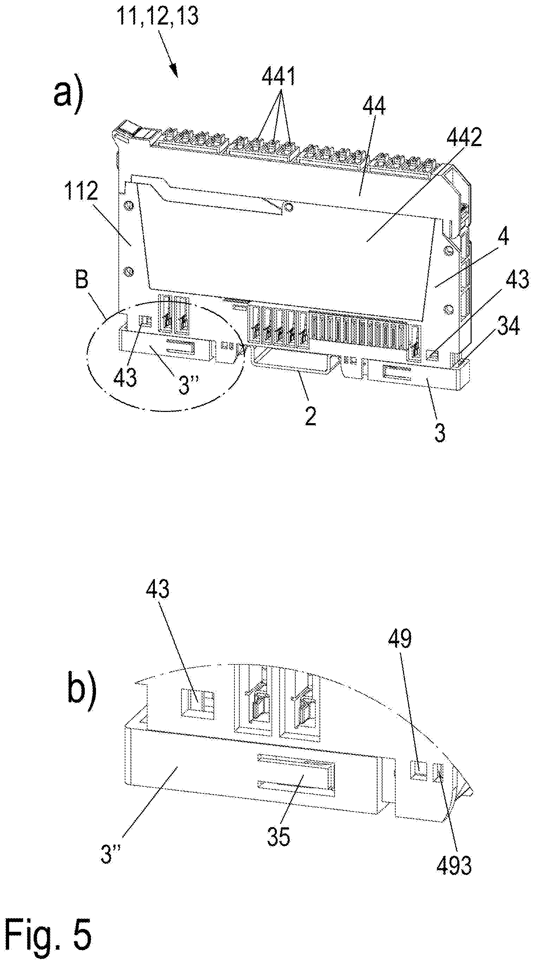

Fig. 5 zeigt in (a) eine weitere perspektivische Ansicht einer der Baugruppen 11, 12, 13 der Fig. 1 mit Anschlussleiste 44, sowie in (b) einen Ausschnitt B aus (a). Sichtbar ist die in der Darstellung der Fig. 1 an der Nachbarseitenwand 121 anliegende Seitenwand 112.

In dem Ausschnitt sind vor allem das Schiebemittel 35, die erste Ausnehmung 43, das Gegenrastmittel 49 in Form einer zweiten Ausnehmung sowie eine dritte Ausnehmung 493 erkennbar.

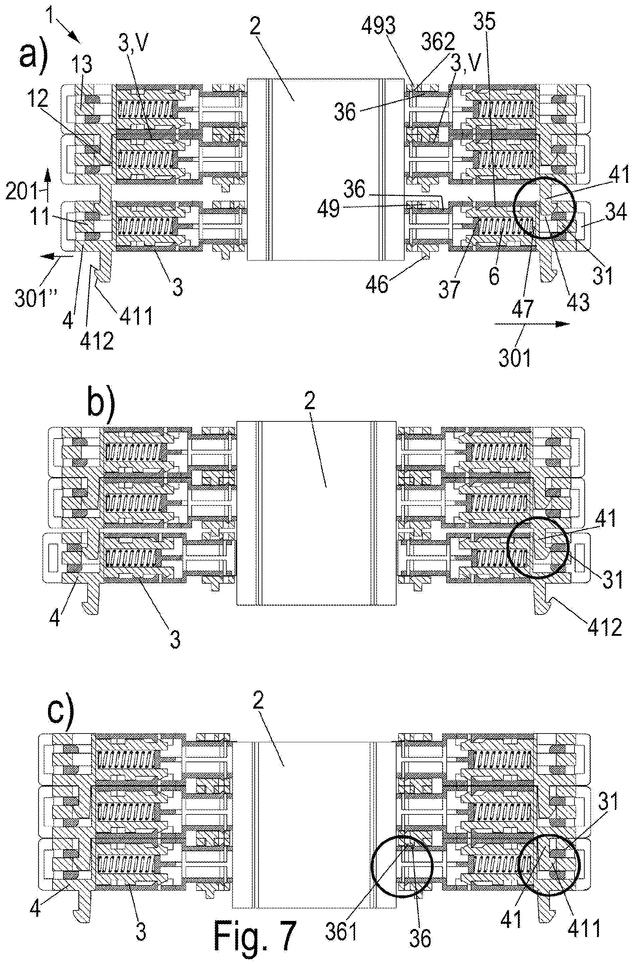

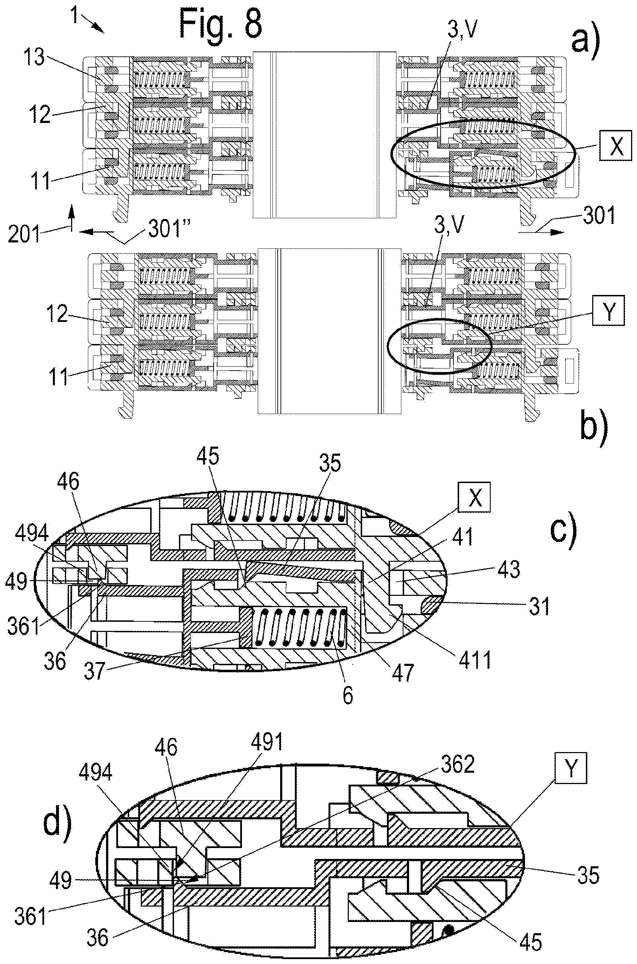

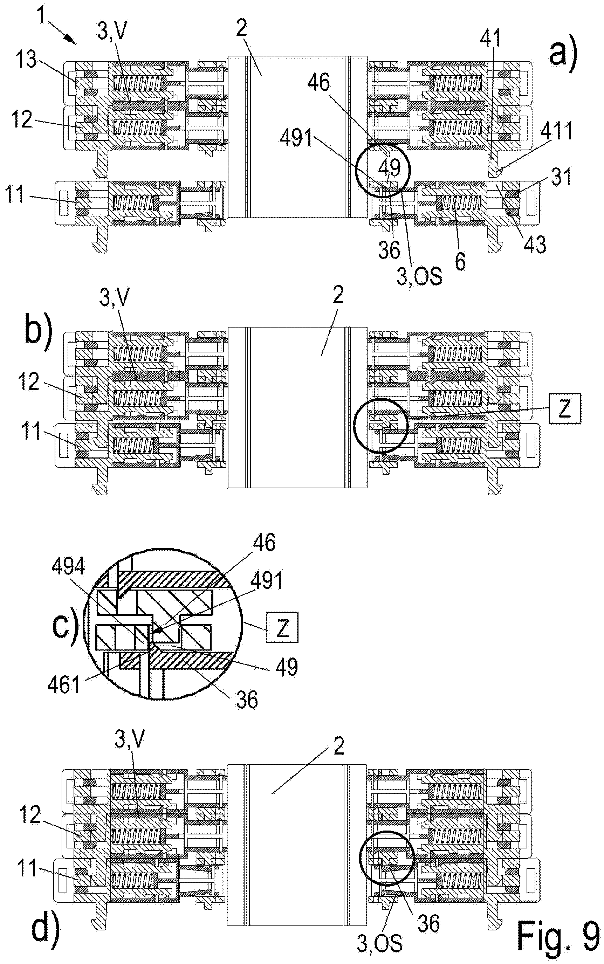

Fig. 6 zeigt eine Vorderansicht des in Fig. 1 dargestellten Anschlussblocks. Und die Fig. 7 - 9 zeigen jeweils Schnittdarstellungen des Anschlussblocks entlang der Linie C-C der Fig. 6 sowie in Fig. 8(c), (d) und Fig. 9 (c) Ausschnitte davon.

In den Fig. 7 (a) - (c) ist das erstmalige Anreihen der Baugruppe 11 an die Nachbarbaugruppe 12 dargestellt.

Das Nachbarbaugruppenrastmittel 41 wird beim Verschieben der Baugruppe 11 in Anreihrichtung 201 durch die erste Ausnehmung 43 bewegt. Es ist hakenförmig ausgebildet und weist eine Schrägseite 411 sowie eine Rastecke 412 auf. Die Schrägseite 411 gerät beim Verschieben der Baugruppe in Anlage mit dem Baugruppenrastmittel 31, so dass das Baugruppenrastmittel 31 beim weiteren Verschieben der Baugruppe 11 an der Schrägseite 411 des Nachbarbaugruppenrastmittels 41 entlang gleitet und dabei gegen die Kraft des Kraftmittels 6 in die Verschieberichtung 301 verschoben wird. Dabei wird das Fußteil 3 in die Verschieberichtung 301 verschoben. Wenn das Baugruppenrastmittel 31 in Eingriff mit der Rastecke 412 des Nachbarbaugruppenrastmittels 41 gerät, wird das Fußteil 3 in Richtung der Kraft des Kraftmittels 6 gegen die Verschieberichtung 301 zurück geschoben, bis das Baugruppenrastmittel 31 in der Rastecke 412 des Nachbarbaugruppenrastmittels 41 anliegt und mit der Rastecke 412 verrastet. Bevorzugt liegt die Seitenwand 112 der Baugruppe 11 dann an der Nachbarseitenwand 121 im Wesentlichen an. Das Fußteil 3 befindet sich dann in der an der Tragschiene 2 sowie an der Nachbarbaugruppe 12 verrasteten Stellung V (s. Fig. 8).

Das Rastmittel 36 weist ein hakenförmiges Ende 361 mit einer Schrägseite 362 auf und ist in der dritten Ausnehmung 493 angeordnet. Beim Verrasten erstreckt sich das Entrastmittel 46 in das als eine zweite Ausnehmung ausgebildete Gegenrastmittel 49.

Fig. 8 zeigt das Lösen der Baugruppe 11 von der Nachbarbaugruppe 12.

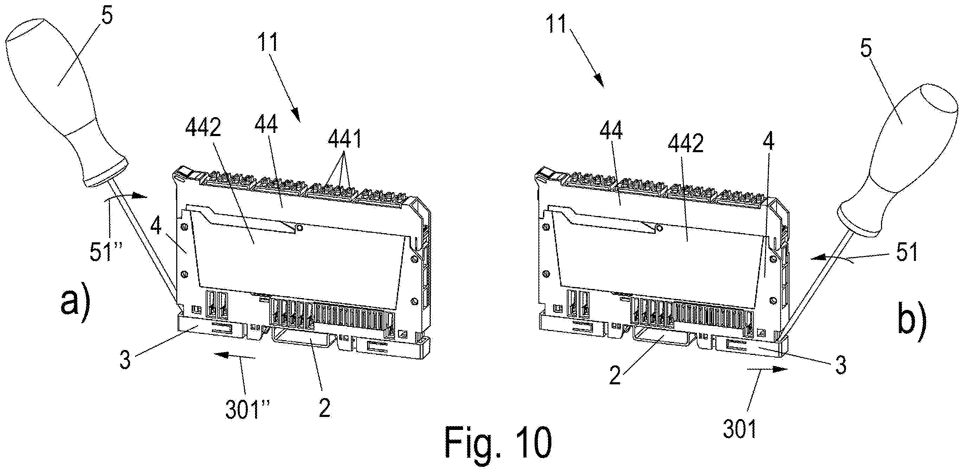

Dabei wird das Fußteil 3, beispielsweise mit Hilfe eines Schraubendrehers 5 (s. Fig. 10), möglichst weit in die Verschieberichtung 301 verschoben. Das am Fußteil 3 der Baugruppe 11 angeordnete Schiebemittel 35, welches ebenfalls hakenförmig mit einer Schrägseite 351 ausgebildet ist, gerät mit seiner Schrägseite 351 in Anlage an eine am Grundkörper 4 der Baugruppe 11 angeordnete Rampe 45, und gleitet an der Rampe 45 entlang, wobei das Schiebemittel 35 in Anreihrichtung 201 verschoben wird, bis es an der Nachbarbaugruppe 12 anliegt und die Baugruppe 11 geringfügig gegen die Anreihrichtung 201 verschiebt.

Gleichzeitig wird das Baugruppenrastmittel 31 in Verschieberichtung 301, 301" verschoben, so dass es außer Eingriff mit der Rastecke 412 des Nachbarbaugruppenrastmittels 41 kommt. Beim Verschieben der Baugruppe 11 gegen die Anreihrichtung 201 bewegt sich das Nachbarbaugruppenrastmittel 41 dabei zumindest teilweise aus der ersten Ausnehmung 43 heraus.

Das Rastmittel 36 gleitet beim Verschieben des Fußteils 3 entgegen die Verschieberichtung 301, 301" mit seiner Schrägseite 361 an einem Stegteil 494 des Grundkörpers 4 entlang, bis es in Eingriff mit dem als zweite Ausnehmung ausgebildeten Gegenrastmittel 49 gerät. Da die Baugruppe 11 durch das Verschieben gegen die Anreihrichtung 201 mittels des Schiebemittels 35 relativ zur Nachbarbaugruppe 12 verschoben und daher von dieser beabstandet ist, erstreckt sich das im verrasteten Zustand V in das Gegenrastmittel 49 eingreifende Entrastmittel 46 nur noch teilweise in das Gegenrastmittel 49, so dass das Rastmittel 36 in Eingriff mit dem Gegenrastmittel 49 gerät.

Beim Loslassen wird das Fußteil 3 mit der Kraft des Kraftmittels 6 gegen die Verschieberichtung 301 zurückgestellt. Dabei gleitet das Schiebemittel 35 mit seiner Schrägseite 351 entlang der Rampe 45 zurück. Außerdem wird das Rastmittel 36 gegen die Verschieberichtung 301 verschoben, bis es an einer dem Gegenrastmittel 49 zugewandten Fläche 491 des Stegteils 494 anliegt und das Fußteil 3 in einer Offenstellung OS verrastet.

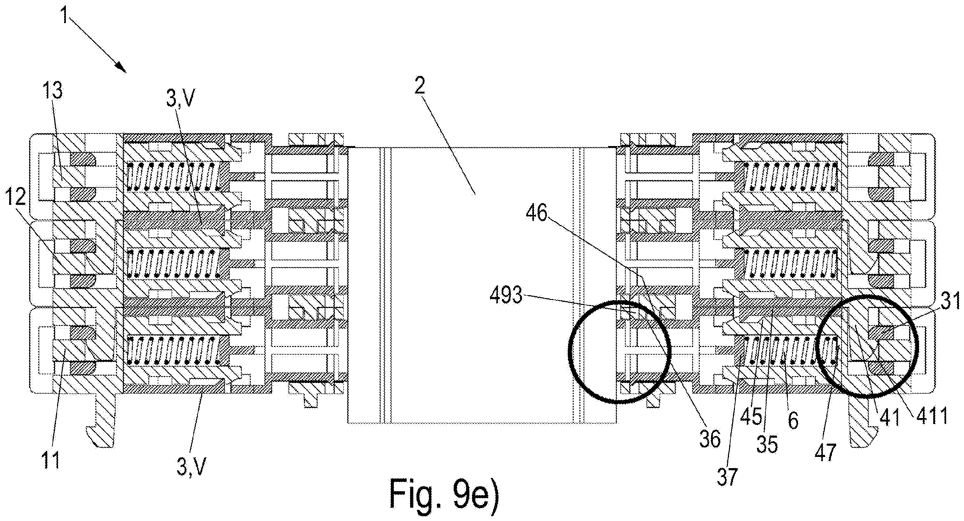

Fig. 9 zeigt das Anreihen einer in der Offenstellung OS befindlichen Baugruppe 11 an die Nachbarbaugruppe 12. Wenn sich das Fußteil 3 in der Offenstellung OS befindet, wird beim Verschieben der Baugruppe 11 in Verschieberichtung 301 das Entrastmittel 46 in das als zweite Ausnehmung ausgebildete Gegenrastmittel 49 eingeschoben und schiebt das Rastmittel 36 gegen die Anreihrichtung 201 aus dem Gegenrastmittel 49 heraus, bis dieses außer Eingriff mit dem Gegenrastmittel 49 ist. Dann ist das Fußteil 3 wieder gegen die Verschieberichtung 301 bis zur verrasteten Stellung V verschiebbar.

Gleichzeitig wird das Nachbarbaugruppenrastmittel 41 wieder in die erste Ausnehmung 43 hinein geschoben, wobei es mit seiner Schrägseite 411 analog der Beschreibung der Fig. 7 entlang dem Baugruppenrastmittel 31 gleitet, bis dieses in Eingriff mit der Rastecke 412 des Nachbarbaugruppenrastmittels 41 gerät und an diesem anliegt. In diesem Zustand ist die Baugruppe 11 erneut an der Tragschiene 2 sowie der Nachbarbaugruppe 12 verrastet und befindet sich in der verrasteten Stellung V.

Die Baugruppe 11 kann sowohl in Offenstellung OS als auch in verrasteter Stellung V ausgeliefert werden.

Fig. 10 demonstriert das Lösen der Baugruppe 11 mit Anschlussleiste 44 und Elektronik- Element 442 der Fig. 4 und 5 von der Tragschiene 2 mittels des Betätigungsmittels 5, hier mittels eines Schraubendrehers 5. Die hier gezeigte Baugruppe 11 weist zwei Fußteile 3 auf, die mit voneinander wegweisend ausgerichteten Rändern 22 der Tragschiene 2 zusammenwirken. Dadurch ergeben sich auch hier, wie in Fig. 1 gezeigt, Richtungsänderungen, die durch Doppelstriche an den Bezugszeichen 301, 301", 51, 51" gekennzeichnet sind.

Der Schraubendreher 5 wird in die Handhabe 34 des Fußteils 3, die hier als eine vierte Ausnehmung ausgebildet ist, eingesteckt und in eine Löserichtung 51 verschwenkt. Dabei stützt er sich am Grundkörper 4 der Baugruppe 11 ab und verschiebt das Fußteil 3 nach dem in den Fig. 7 - 9 erläuterten Mechanismus in die Verschieberichtung 301. Dabei wird das Fußteil 3 aufgrund des Schiebemittels 35 geringfügig gegen die Anreihrichtung 201 (s. Fig. 1) verschoben. Beim Zurückschieben gegen die Verschieberichtung 301 verrastet das Fußteil 3 in der Offenstellung OS, s. hierzu Fig. 9(a). Das Nachbarbaugruppenrastmittel 41, das mit dem Baugruppenrastmittel 31 des in der Offenstellung OS verrasteten Fußteils 3 zusammenwirkt, ist daher von der Baugruppe 11 gelöst und der ersten Ausnehmung 43 entnehmbar. Außerdem ist das Fußteil 3 nicht mehr am Rand 22 der Tragschiene 2 verrastet.

Der Vorgang wird anschließend für das andere Fußteil 3 der Baugruppe 11 wiederholt, so dass auch das Nachbarbaugruppenrastmittel 41 (s. Fig. 7 - 9) des anderen Fußteils 3 gelöst ist. Anschließend ist die Baugruppe 11 von der Tragschiene 2 entnehmbar, in dem sie gegen die Anreihrichtung 201 verschoben und anschließend gegen die Aufrastrichtung 101 verschoben und/oder gegen die Aufrastdrehrichtung 102 verschwenkt wird.

Da bei diesem hier erläuterten Lösen der Baugruppe 11 die Fußteile 3 der Baugruppe 11 nacheinander gelöst werden, wird die Baugruppe 11 zunächst geringfügig mittels des Schiebemittels 35 des zuerst gelösten Fußteils 3 gegenüber der Baugruppenebene 100 der Nachbarbaugruppe 12 verstellt. Das Verstellen ist aber zum Einen sehr gering. Zum Anderen ist auch ein gleichzeitiges Lösen der beiden Fußteile 3 möglich, das ein Parallelverschieben der Baugruppe 11 gegenüber der Nachbarbaugruppe 12 bewirkt. Außerdem sind auch die Fußteile 3 miteinander so koppelbar, dass mittels des Lösens eines Fußteils 3 gleichzeitig das andere Fußteil 3 gelöst wird, so dass die Baugruppe 11 beim Lösen ebenfalls parallel der Nachbarbaugruppe 12 verschoben wird. Schließlich ist auch eine erfindungsgemäße Anordnung mit nur einem Fußteil 3 realisierbar, die beim Lösen ein Parallelverschieben der Baugruppe 11 zur Nachbarbaugruppe 12 ermöglicht. In diesen Ausführungsformen ist die Baugruppe 11 nicht nur durch reines Parallelverschieben gegenüber der Nachbarbaugruppe 12 an dieser anordbar, sondern auch durch reines Parallelverschieben von der Nachbarbaugruppe 12 lösbar.

### Bezugszeichenliste

- 1: Anschlussblock
- 11: Baugruppe
- 112: In der verrasteten Stellung an der Nachbarseitenwand der Nachbarbaugruppe anliegende Seitenwand der Baugruppe
- 113: Seitenwand, an der das Fußteil anordbar ist
- 12: Nachbarbaugruppe
- 121: In der verrasteten Stellung an der Seitenwand der Baugruppe anliegende Nachbarseitenwand der Nachbarbaugruppe
- 100, 100': Baugruppenebene
- 101: Aufrastrichtung
- 102, 102": Aufrastdrehrichtung
- 103, 103': die Tragschienenebene schneidende Schnittlinie der Baugruppenebene
- 104: Mittellinie durch die Baugruppe
- 2: Tragschiene
- 22: Rand, Schenkel
- 23: Querstrebe
- 24: Seitenstrebe
- 200: Tragschienenebene
- 201: Anreihrichtung
- 202: Längserstreckung der Tragschiene
- 3, 3": Fußteil
- 31: Baugruppenrastmittel
- 32: Tragschienenrastmittel
- 33: Schräge
- 34: Handhabe
- 35: Schiebemittel
- 351: Schrägseite des Schiebemittels
- 36: Rastmittel
- 361: Hakenförmiges Ende des Rastmittels
- 362: Schrägseite des Rastmittels
- 37: Steg
- 38: Längserstreckung
- 301, 301": Verschieberichtung
- 4: Grundkörper
- 41: Nachbarbaugruppenrastmittel
- 411: Schrägseite des Nachbarbaugruppenrastmittels
- 412: Rastecke des Nachbarbaugruppenrastmittels
- 43: Erste Ausnehmung zur Aufnahme des Baugruppenrastmittels
- 44: Anschlussleiste
- 441: Elektrische Anschlüsse
- 442: Elektronik- Element
- 45: Rampe
- 46: Entrastmittel
- 47: Gegensteg
- 48: Elektrische Kontakte, Stecker, Buchse
- 49: Gegenrastmittel, Zweite Ausnehmung zur Aufnahme des Rastmittels
- 491: Dem Gegenrastmittel zugewandte Fläche des Stegteils
- 493: Dritte Ausnehmung zur Aufnahme des Rastmittels
- 494: Stegteil
- 5: Betätigungsmittel
- 51: Löserichtung
- 6: Kraftmittel, Feder
- 99: Winkel
- OS: Offenstellung
- V: Verrastete Stellung des Fußteils

## Patentansprüche

1. Baugruppe (11), insbesondere elektrische Baugruppe, die an einer Tragschiene (2) befestigbar und durch Verschieben in eine Anreihrichtung (201) entlang dieser an eine an der Tragschiene (2) angeordnete Nachbarbaugruppe (12) anreihbar ist, mit einem Grundkörper (4), und mit einem Fußteil (3), welches relativ zum Grundkörper (4) in und entgegen eine Verschieberichtung (301) verschiebbar ist, wobei die Baugruppe (11) durch Verschieben des Fußteils (3) in Verschieberichtung (301) von der Nachbarbaugruppe (12) lösbar ist, **dadurch gekennzeichnet, dass** sie beim Lösen gleichzeitig entgegen der Anreihrichtung (201) von der Nachbarbaugruppe (12) weg verschoben wird.

2. Baugruppe (11) nach Anspruch 1, **dadurch gekennzeichnet, dass** am Fußteil (3) ein Schiebemittel (35) vorgesehen ist, wobei am Grundkörper (4) eine Rampe (45) vorgesehen ist, wobei das Schiebemittel (35) beim Lösen der Baugruppe (11) von der Nachbarbaugruppe (12) an der Rampe (45) entlang gleitet und die Baugruppe (11) gegen die Anreihrichtung (201) verschiebt.

3. Baugruppe (11) nach einem der vorherigen Ansprüche, **dadurch gekennzeichnet, dass** am Fußteil (3) ein Rastmittel (36) vorgesehen ist, welches mit einem am Grundkörper (4) vorgesehenen Gegenrastmittel (46) so zusammenwirkt, dass das Fußteil (3) beim Lösen der Baugruppe (11) von der Nachbarbaugruppe (12) am Grundkörper (4) in einer Offenstellung (OS) verrastet.

4. Baugruppe (11) nach einem der vorherigen Ansprüche, **dadurch gekennzeichnet, dass** die Baugruppe (11) durch Verschieben des Fußteils (3) in die Verschieberichtung (301) sowohl an der Nachbarbaugruppe (12) als auch an der Tragschiene (2) anordbar ist.

5. Baugruppe (11) nach einem der vorherigen Ansprüche, **dadurch gekennzeichnet, dass** sich die Tragschiene (2) parallel einer Tragschienenebene (200) erstreckt, und wobei sich die Nachbarbaugruppe (12) parallel einer Baugruppenebene (100) erstreckt, und wobei die Baugruppe (11) durch Verschieben in eine Aufrastrichtung (101) und/oder Verschwenken in eine Aufrastdrehrichtung (102), die jeweils parallel der Baugruppenebene (100) verlaufen, an die Tragschiene (2), und durch Verschieben entlang der Anreihrichtung (201), die parallel der Tragschienenebene (200) verläuft, an die Nachbarbaugruppe (12) anordbar ist.

6. Baugruppe (11) nach Anspruch 5, **dadurch gekennzeichnet, dass** die Tragschienenebene (200) in einem rechten Winkel (99) zur Baugruppenebene (100) verläuft

7. Baugruppe (11) nach einem der Ansprüche 5 - 6, **dadurch gekennzeichnet, dass** die Verschieberichtung (301) parallel der Tragschienenebene (200) sowie parallel der Baugruppenebene (100) verläuft.

8. Baugruppe (11) nach einem der vorherigen Ansprüche, **dadurch gekennzeichnet, dass** sie ein Baugruppenrastmittel (31) umfasst, welches zum Verrasten der Baugruppe (11) an die Nachbarbaugruppe (12) vorgesehen ist, wobei die Nachbarbaugruppe (12) ein Nachbarbaugruppenrastmittel (41) umfasst, welches beim Verrasten mit dem Baugruppenrastmittel (31) zusammenwirkt, wobei das Baugruppenrastmittel (31) zum Anordnen der Baugruppe (11) an die Nachbarbaugruppe (12) in Verschieberichtung (301) gegen die Kraft eines Kraftmittels (6) verschieblich, und zum Verrasten der Baugruppe (11) an der Nachbarbaugruppe (12) gegen die Verschieberichtung (301) in Richtung der Kraft zurückschiebbar vorgesehen ist

9. Baugruppe (11) nach einem der vorherigen Ansprüche, **dadurch gekennzeichnet, dass** sie ein Tragschienenrastmittel (32) umfasst, welches zum Verrasten der Baugruppe (11) an die Tragschiene (2) vorgesehen ist, wobei die Tragschiene (2) einen Rand (22) aufweist, welcher beim Verrasten mit dem Tragschienenrastmittel (32) zusammenwirkt, wobei das Tragschienenrastmittel (32) zum Anordnen der Baugruppe (11) an die Nachbarbaugruppe (12) in Verschieberichtung (301) gegen die Kraft des Kraftmittels (6) verschieblich, und zum Verrasten der Baugruppe (11) an der Tragschiene (2) gegen die Verschieberichtung (301) in Richtung der Kraft zurückschiebbar vorgesehen ist.

10. Baugruppe (11) nach Anspruch 8 oder 9, **dadurch gekennzeichnet, dass** das Baugruppenrastmittel (31) und/oder das Tragschienenrastmittel (32) an dem Fußteil (3) angeordnet sind.

11. Baugruppe (11) nach einem der vorherigen Ansprüche, **dadurch gekennzeichnet, dass** das Fußteil (3) in die Verschieberichtung (301) gegen die Kraft des Kraftmittels (6), insbesondere einer Feder, und gegen die Verschieberichtung (301) in Richtung der Kraft des Kraftmittels (6) verschieblich ist.

12. Baugruppe (11) nach einem der vorherigen Ansprüche, **dadurch gekennzeichnet, dass** das Fußteil (3) reversibel lösbar am Grundkörper (4) angeordnet ist.

13. Baugruppe (11) nach einem der vorherigen Ansprüche, **dadurch gekennzeichnet, dass** am Fußteil (3) eine Schräge (33) vorgesehen ist, die beim Anordnen der Baugruppe (11) an die Tragschiene (2) entlang der Tragschiene (2) gleitet.

14. Baugruppe (11) nach einem der vorherigen Ansprüche, **dadurch gekennzeichnet, dass** am Fußteil (3) eine Handhabe (34), insbesondere zur Betätigung mittels eines Betätigungsmittels (5), zum Lösen der Baugruppe (11) von der Nachbarbaugruppe (12) und/oder der Tragschiene (2) vorgesehen ist.

15. Anschlussblock (1) mit einer Tragschiene und zumindest einer Baugruppe (11) nach einem der Ansprüche 1 - 14, die an der Tragschiene (2) anordbar ist.

## Claims

1. Subassembly (11), in particular, electrical subassembly, which can be attached to a mounting rail (2) and which, by shifting in a line-up direction (201), can be lined up along it against an adjoining subassembly (12) arranged on the mounting rail (2) with a base body (4) and with a foot part (3) that can be shifted with relation to base body (4) and against the shifting direction (301), wherein the subassembly (11) can be separated from the adjoining subassembly (12) by shifting the foot part (3) in the shifting direction (301), **characterized in that**, during separation, it is shifted simultaneously against the line-up direction (201) from the adjoining subassembly (12).

2. Subassembly (11) according to Claim 1, **characterized in that** a shifting means (35) is provided on foot part (3), whereby a ramp (45) is provided on base body (4), whereby the shifting means (35) during separation of subassembly (11) from the adjoining subassembly (12) slides along ramp (45) and pushes subassembly (11) against line-up direction (201).

3. Subassembly (11) according to one of the above claims, **characterized in that** a latch means (36) is provided on foot part 3, which so cooperates with a counterlatch means (46) provided on base body (4) that foot part (3) during the separation of subassembly (11) from the adjoining subassembly (12) will be latched on base body (4) in an open position (OS).

4. Subassembly (11) according to one of the above claims, **characterized in that** subassembly (11) by shifting foot part (3) in the shifting direction (301) can be arranged both on the adjoining subassembly (12) and on the mounting rail (2).

5. Subassembly (11) according to one of the above claims, **characterized in that** mounting rail (2) extends parallel to a mounting rail plane (200), and whereby the adjoining subassembly (12) extends parallel to a subassembly group (100), and whereby the subassembly (11) by shifting in a latch-on direction (101) and/or by swinging into a latch-on rotation direction (102), both of which in each case run parallel to the subassembly plane (100), can be arranged upon mounting rail (2) and by shifting along the alignment direction (201) that runs parallel to mounting rail plane (200) can be arranged upon the adjoining subassembly (12).

6. Subassembly (11) according to Claim 5, **characterized in that** mounting rail plane (200) runs at a right angle (99) with respect to the subassembly plane (100).

7. Subassembly (11) according to one of Claims 5-6, **characterized in that** the shifting direction (301) runs parallel to the mounting rail plane (200) and parallel to the subassembly plane (100).

8. Subassembly (11) according to one of the above claims, **characterized in that** it comprises a subassembly latch means (31) that is provided for the latching of subassembly (11) upon the adjoining subassembly (12), whereby the adjoining subassembly (12) comprises an adjoining subassembly latch means (41) that cooperates with the subassembly latch means (31) during the latching action, whereby the subassembly latch means (31) for the arrangement of subassembly (11) upon adjoining subassembly (12) can be shifted in the shifting direction (301) against the force of a power means (6) and are provided for the latching of subassembly (11) upon the adjoining subassembly (12) against the shifting direction (301) in such a way that it can be pushed back in the direction of the force.

9. Subassembly (11) according to one of the above claims, **characterized in that** it comprises a mounting rail latch means (32) that is provided for the latching of subassembly (11) upon mounting rail (2), which cooperates with the mounting rail latch means (32) during latching, whereby the mounting rail latch means (32) for the arrangement of subassembly (11) upon the adjoining subassembly (12) can be pushed in the shifting direction (301) against the force of power means (6), and latching the subassembly (11) on mounting rail (2) is provided against the shifting direction (301) so that it can be pushed back in the direction of the force.

10. Subassembly (11) according to Claim 8 or 9, **characterized in that** the subassembly latch means (31) and/or the mounting rail latch means (32) are arranged on foot path (3).

11. Subassembly (11) according to one of the above claims, **characterized in that** the foot part (3) can be pushed in the shifting direction (301) against the force of power means (6), in particular, a spring, and against the shifting direction (301) in the direction of the force of the power means (6).

12. Subassembly (11) according to one of the above claims, **characterized in that** foot part (3) is arranged on base body (4) in a reversibly separable manner.

13. Subassembly (11) according to one of the above claims, **characterized in that** a slope (33) is provided on foot part (3), which slope, during the arrangement of subassembly (11) on mounting rail (2), will slide along mounting rail (2).

14. Subassembly (11) according to one of the above claims, **characterized in that** on foot part (3), there is provided a handle (34), in particular, for actuation by means of an actuation means (5) for the separation of subassembly (11) from adjoining subassembly (12) and/or mounting rail (2).

15. Connection block (1) with a mounting rail and at least one subassembly (11) according to one of Claims 1-14, which can be arranged on mounting rail 2.

## Revendications

1. Module (11), en particulier module électrique, qui peut être fixé sur un rail porteur (2) et qui peut être joint à un module voisin (12) disposé sur le rail porteur (2) en étant déplacé le long de celui-ci dans une direction de jonction (201), comprenant un corps de base (4) ainsi qu'une partie pied (3) qui peut être déplacée par rapport au corps de base (4) dans et à l'encontre d'une direction de déplacement (301), le module (11) pouvant être libéré du module voisin (12) par déplacement de la partie pied (3) dans la direction de déplacement (301), **caractérisé en ce qu'**il est simultanément déplacé à l'encontre de la direction de jonction (201) par rapport au module voisin (12) lorsqu'il est libéré.

2. Module (11) selon la revendication 1, **caractérisé en ce qu'**un moyen coulissant (35) est prévu sur la partie pied (3), une rampe (45) étant prévue sur le corps de base (4), le moyen coulissant (35) glissant le long de la rampe (45) et déplaçant le module (11) à l'encontre de la direction de jonction (201) lorsque le module (11) est libéré du module voisin (12).

3. Module (11) selon l'une des revendications précédentes, **caractérisé en ce qu'**un moyen d'encliquetage (36) est prévu sur la partie pied (3), lequel coopère avec un moyen d'encliquetage complémentaire (46) prévu sur le corps de base (4) de telle sorte que, lorsque le module (11) est libéré du module voisin (12), la partie pied (3) s'encliquette dans une position ouverte (OS) sur le corps de base (4).

4. Module (11) selon l'une des revendications précédentes, **caractérisé en ce que** le module (11) peut être disposé aussi bien contre le module voisin (12) que sur le rail porteur (2) par déplacement de la partie pied (3) dans la direction de déplacement (301).

5. Module (11) selon l'une des revendications précédentes, **caractérisé en ce que** le rail porteur (2) s'étend parallèlement à un plan de rail porteur (200), le module voisin (12) s'étendant parallèlement à un plan de module (100), et le module (11) pouvant être disposé sur le rail porteur (2) par déplacement dans une direction d'encliquetage (101) et/ou pivotement dans une direction d'encliquetage par rotation (102) qui s'étendent chacune parallèlement au plan de module (100), et pouvant être disposé contre le module voisin (12) par déplacement le long de la direction de jonction (201) qui s'étend parallèlement au plan de rail porteur (200).

6. Module (11) selon la revendication 5, **caractérisé en ce que** le plan de rail porteur (200) s'étend à angle droit (99) par rapport au plan de module (100).

7. Module (11) selon l'une des revendications 5 à 6, **caractérisé en ce que** la direction de déplacement (301) s'étend parallèlement au plan de rail porteur (200) et parallèlement au plan de module (100).

8. Module (11) selon l'une des revendications précédentes, **caractérisé en ce qu'**il comprend un moyen d'encliquetage de module (31) qui est prévu pour encliqueter le module (11) sur le module voisin (12), le module voisin (12) comprenant un moyen d'encliquetage de module voisin (41) qui coopère avec le moyen d'encliquetage de module (31) lors de l'encliquetage, le moyen d'encliquetage de module (31) étant prévu déplaçable dans la direction de déplacement (301) à l'encontre de la force d'un moyen de force (6) pour disposer le module (11) contre le module voisin (12), et déplaçable en arrière à l'encontre de la direction de déplacement (301) dans la direction de la force pour encliqueter le module (11) sur le module voisin (12).

9. Module (11) selon l'une des revendications précédentes, **caractérisé en ce qu'**il comprend un moyen d'encliquetage de rail porteur (32) qui est prévu pour encliqueter le module (11) sur le rail porteur (2), le rail porteur (2) présentant un bord (22) qui coopère avec le moyen d'encliquetage de rail porteur (32) lors de l'encliquetage, le moyen d'encliquetage de rail porteur (32) étant prévu déplaçable dans la direction de déplacement (301) à l'encontre de la force du moyen de force (6) pour disposer le module (11) contre le module voisin (12), et déplaçable en arrière à l'encontre de la direction de déplacement (301) dans la direction de la force pour encliqueter le module (11) sur le rail porteur (2).

10. Module (11) selon la revendication 8 ou 9, **caractérisé en ce que** le moyen d'encliquetage de module (31) et/ou le moyen d'encliquetage de rail porteur (32) sont disposés sur la partie pied (3).

11. Module (11) selon l'une des revendications précédentes, **caractérisé en ce que** la partie pied (3) peut être déplacée dans la direction de déplacement (301) à l'encontre de la force du moyen de force (6), en particulier d'un ressort, et à l'encontre de la direction de déplacement (301) dans la direction de la force du moyen de force (6).

12. Module (11) selon l'une des revendications précédentes, **caractérisé en ce que** la partie pied (3) est disposée de façon réversiblement libérable sur le corps de base (4).

13. Module (11) selon l'une des revendications précédentes, **caractérisé en ce qu'**un chanfrein (33) est prévu sur la partie pied (3), lequel glisse le long du rail porteur (2) lorsque le module (11) est disposé sur le rail porteur (2).

14. Module (11) selon l'une des revendications précédentes, **caractérisé en ce qu'**un moyen de manipulation (34), en particulier destiné à être actionné à l'aide d'un moyen d'actionnement (5), est prévu sur la partie pied (3) pour libérer le module (11) du module voisin (12) et/ou du rail porteur (2).

15. Bloc de raccordement (1) comprenant un rail porteur et au moins un module (11) selon l'une des revendications 1 à 14 qui peut être disposé sur le rail porteur (2).
